# EUROPÄISCHE PATENTSCHRIFT

(11) **EP 0 397 063 B1**
(45) Veröffentlichungstag und Bekanntmachung des Hinweises auf die Patenterteilung: **09.02.1994**
(21) Anmeldenummer: 90108475.6
(22) Anmeldetag: 05.05.1990
(51) Int. Cl.: H01B 11/10, H02G 3/04, H04B 15/02, H01R 13/658

(54) **Einrichtung zum Schutz elektrischer Anlagen**
Protection device for electrical installations
Dispositif pour la protection d'installations électriques

(30) Priorität: 06.05.1989 DE 3914930; 17.10.1989 DE 3934606
(43) Veröffentlichungstag der Anmeldung: 14.11.1990
(73) Patentinhaber: Deutsche Aerospace Airbus Gesellschaft mit beschränkter Haftung, 21129 Hamburg (DE)
(72) Erfinder: Kirma, Safa, D-2000 Wedel/Holstein (DE)

(56) Entgegenhaltungen:
- EP-A- 0 013 622
- EP-A- 0 396 963
- EP-A- 0 397 062
- DE-A- 3 104 518
- FR-A- 2 148 843
- US-A- 2 411 800

## Beschreibung

Die Erfindung betrifft eine Einrichtung zum Schutz elektrischer Anlagen gegen elektromagnetische Störungen, insbesondere Überspannungen und Blitzeinwirkungen, in Form metallischer Profilschläuche, die die zwischen den einzelnen elektrischen Geräten verlegten Leitungen umgeben und die elektrisch leitend mit Ableitpunkten verbunden sind und bei der die Anschlußelemente jeweils mit einer Buchse zur Aufnahme des Profilschlauches sowie mit einem Spannelement zur Fixierung des Profilschlauches versehen sind.

Einrichtungen dieser Art werden insbesondere in Flugzeugen benötigt, in denen nicht nur auf relativ engem Raum eine große Anzahl elektrischer Geräte mit sehr unterschiedlichen Nutzsignalen und Störungsempfindlichkeiten angeordnet ist und bei denen die Möglichkeit gegenseitiger Beeinflussung zuverlässig ausgeschaltet sein muß, sondern die zugleich in ihrer Sicherheit durch die Auswirkungen eines Blitzeinschlages auf die elektronische Ausrüstung stark gefährdet sind.

Aus diesem Grunde stellt es eine bereits bekannte Maßnahme dar, elektrische Verbindungsleitungen in Flugzeugen, insbesondere auch ganze Kabelbäume, mit Abschirmungen aus metallisch leitendem Material zu versehen und diese Abschirmungen jeweils an den Enden mit den Gehäusen der elektrischen Geräten oder mit in diesen speziell vorgesehenen Masseleitungen zu verbinden.

Zu diesem Zweck wird im allgemeinen ein aus einzelnen Metallitzen bestehendes schlauchförmiges Geflecht verwendet, das, im Fall stromführender Steckerverbindungen, an den Kabelenden mit dem metallischen Stekkergehäuse verbunden ist. Häufig erfolgt die Verbindung dieses Geflechtes mit den vorgesehenen Ableitpunkten aber auch über separate Schellen, die an den Kabelenden das Geflecht umgeben und von denen aus ein separater Ableiter, der auch als "pig tail" bezeichnet wird, zum Ableitpunkt geführt ist.

Aus der DE-A-3 104 518 ist eine Anschlußarmatur für flexible Wellschläuche bekannt, wobei die Wellschläuche konzentrisch um die Schlauchachse angeordnete und zueinander parallel verlaufende Wellen aufweisen. Es ist ein Einschraubstutzen mit einem Gewindeteil vorgesehen und der Einschraubstutzen weist ein den Wellschlauch aufnehmendes Gehäuse auf. Das Gehäuse ist mindestens über einen Bereich seines halben Umfanges mit einer Nut zur Halterung eines Arretierungselementes versehen. Das Arretierungselement weist zwei gelenkig miteinander verbindbare und miteinander verriegelbare schellenförmige Teile auf. Auf den Innenseiten dieser Teile verlaufen mehrere Rippen, die jeweils eine Stärke aufweisen, die etwa dem Abstand zwischen den Wellen des Schlauches entspricht. Eine Stirnseite des Arretierungselementes ist mit einer radial ausgerichteten Feder zum Eingriff in die Nut des Gehäuses versehen.

Aus der FR-A-2 148 843 ist ein Metallschlauch bekannt, der ein eingehaktes Profil aufweist und mit einem Kunststoffschlauch zur Innenauskleidung versehen ist. Der Schlauch dient zu einem mechanischen Schutz von lose eingelegten elektrischen Leitungen. Der Metallschlauch ist für eine Erhöhung der Beständigkeit gegenüber äußeren mechanischen Einflüssen vorgesehen. Durch den eingelegten Kunststoffschlauch wird ein unmittelbarer Kontakt zwischen den elektrischen Leitungen und dem Metallschlauch vermieden. Innerhalb des Kunststoffschlauches sind die Leitungen beweglich verlegt.

Ein Nachteil der bekannten Abschirmeinrichtungen liegt darin, daß die hierbei eingesetzten Anschluß- und Verbindungselemente nicht nur relativ aufwendig in ihrer Herstellung sind und ein vergleichsweise hohes Eigengewicht aufweisen, sondern daß darüber hinaus auch Ihre Installation d.h. die Herstellung einer mechanisch und elektrisch einwandfreien Verbindung mit dem Abschirmgeflecht, einen beträchtlichen Zeitaufwand erfordert.

Aufgabe der Erfindung ist es daher, eine Einrichtung der eingangs genannten Art so auszubilden, daß sie auch die Möglichkeit bietet, diesen zuverlässigen Schutz auch in den Anschluß- und Verzweigungsbereichen der Leitungen sicherzustellen und dabei eine einfache Installation gewährleistet.

Die Lösung dieser Aufgabe erfolgt erfindungsgemäß durch eine Einrichtung mit den kennzeichnenden Merkmalen des Anspruchs 1. Vorteilhafte Weiterbildungen dieser Einrichtung, die insbesondere der weiteren Optimierung der durch die erfindungsgemäße Einrichtung erzielbaren Schutzwirkung und einer weitgehenden Vereinfachung ihres Aufbaues und der Montage dienen, sind in den weiteren Ansprüchen 2-5 angegeben.

Bei der Einrichtung gemäß der Erfindung werden als Abschirmung flexible Profilschläuche aus elektrisch leitenden Material, beispielsweise aus Metall verwendet, und dabei ergibt sich nicht nur die angestrebte vollständige Schutzwirkung, sondern es besteht zugleich die Möglichkeit, einen besonders einfach zu realisierenden Übergang zwischen der Abschirmung und den endseitig angeordneten Steckern sowie einen einfachen Einbau von Verzweigungen in Kabelbäumen zu erzielen.

Im folgenden wird die Erfindung, anhand von in der Zeichnung dargestellten Ausführungsbeispielen, näher erläutert. Es zeigen:
- Fig. 1: einen sich verzweigenden, mit einer Abschirmung sowie mit Anschlußelementen versehenen Kabelbaum in teilweise geschnittener Darstellung,
- Fig. 2 und 3: weitere Anschlußelemente in ebenfalls teilweise geschnittener Darstellung,
- Fig. 4: eine Detaildarstellung eines Verzweigungsbereiches eines Kabelbaumes,
- Fig. 5: eine Ausbildung einer Klammer für eine Masseverbindung,
- Fig. 6: eine Darstellung gemäß Fig. 1 mit einem beschichteten Profilschlauch und
- Fig. 7: eine Einzelheit II gemäß Fig. 6.

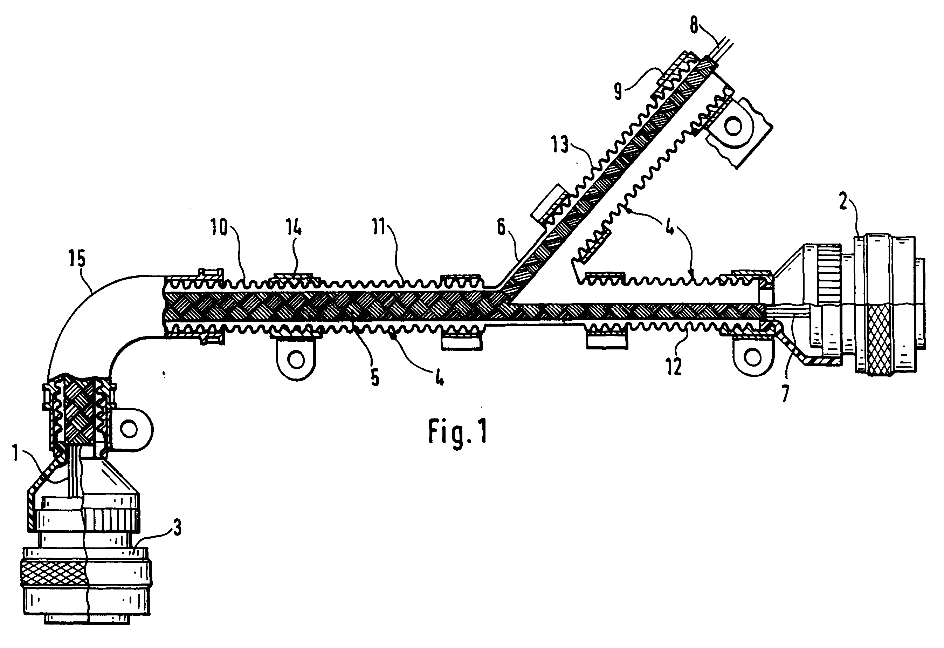

Bei der in Fig. 1 verkürzt dargestellten Anordnung handelt es sich um einen Kabelbaum 1, d.h. um eine zu einem gemeinsamen Strang zusammengefaßte Vielzahl elektrischer Verbindungsleitungen, die im Fall des hier beschriebenen Ausführungsbeispieles im Inneren eines Flugzeuges zwischen hier nicht dargestellten Komponenten der elektrischen Ausrüstung verlegt sind. Der Anschluß des Kabelbaumes 1 an diese Geräte erfolgt jeweils über vielpolige Steckverbindungen, wobei der Aufbau der hierfür verwendeten Anschlußelemente 2,3 nachfolgend noch näher erläutert wird.

Zum Schutz gegen elektromagnetische Störungen, vor allem gegen Überspannungen, wie sie insbesondere als Folge von Blitzeinschlägen auftreten können, ist der Kabelbaum 1 von einer Abschirmung umgeben, die aus einem flexiblen metallischen Wellschlauch 4 besteht, der im Fall des hier dargestellten Ausführungsbeispieles eine Wendelstruktur besitzt. Zusätzlich ist, als Schutz gegen etwaiges Scheuern bzw. andere mechanische Beanspruchungen, der Kabelbaum 1 mit einem Kunststoffgeflecht 5 überzogen, das im Inneren des Wellschlauches 4 liegt.

Wie aus der Darstellung gemäß Fig. 1 hervorgeht, ist der Kabelbaum 1 an einem Verzweigungselement 6 in zwei getrennt weiterlaufende Teilstränge 7,8 aufgeteilt, wobei in der Zeichnung der Teilstrang 8 nur zum Teil dargestellt ist, da er an dieser Stelle durch eine in der Zeichnung nicht dargestellte Abtrennung verläuft. An dieser Stelle ist ein weiteres Anschlußelement 9 angeordnet, das sowohl der Herstellung einer Masseverbindung als auch der Fixierung des Teilstranges 8 dient.

Wie der Darstellung nach Fig. 1 ferner zu entnehmen ist, ist der Wellschlauch 4 in Längsrichtung aus mehreren Teilelementen 10 bis 13 zusammengesetzt, von denen die Elemente 10 und 11 mit einem Verbindungselement 14 zusammengehalten werden. Schließlich ist am linken Ende des Wellenschlauches 4 ein viertelkreisförmiges Formteil 15 vorgesehen, über das der Schlauch 4 eine Umlenkung um etwa 90 Grad erfährt.

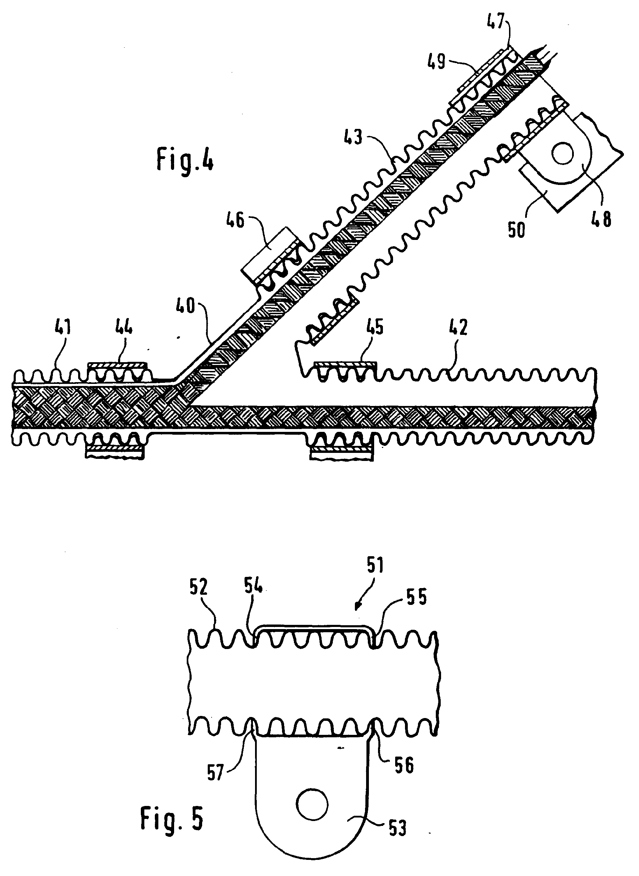

Gemäß Fig. 4 ist der Bereich einer Verzweigung eines mit einer Abschirmeinrichtung ausgerüsteten Kabelbaumes dargestellt. In diesem Bereich wird die Abschirmung durch ein Verzweigungselement 40 fixiert, in das die einzelnen Abschnitte 41,42 und 43 des zur Abschirmung eingesetzten Wellschlauches eingesetzt sind. Letzterer weist im Fall des in dieser Figur dargestellten Ausführungsbeispieles anstelle einer Wendel- eine Ringstruktur auf.

Das aus Metall bzw. metallisiertem Kunststoff bestehende Verzweigungselement 40 setzt sich aus zwei Halbschalen zusammen, die an den Endbereichen jeweils durch Klemmelemente 44 bis 46 zusammengehalten werden. Wie aus der Figur ersichtlich ist, weist das Verzweigungselement 40 in seinen Endbereichen ein Profil auf, das dem Wellenprofil des Schlauches angepaßt ist und dabei eine formschlüssige Verbindung sicherstellt.

Das äußere Ende des Teilbereiches 43 des Kabelbaumes bzw. der Abschirmung ist durch ein Anschlußelement 47 fixiert, das zweigeteilt ausgebildet ist und durch eine mit einem Ansatz 48 versehene Klammer 49 zusammengehalten wird. Über den Ansatz 48 ist dieses Anschlußelement 47 an einem Teil 50 der Struktur des Flugzeuges fixiert, wodurch zugleich die Masseverbindung gegeben ist.

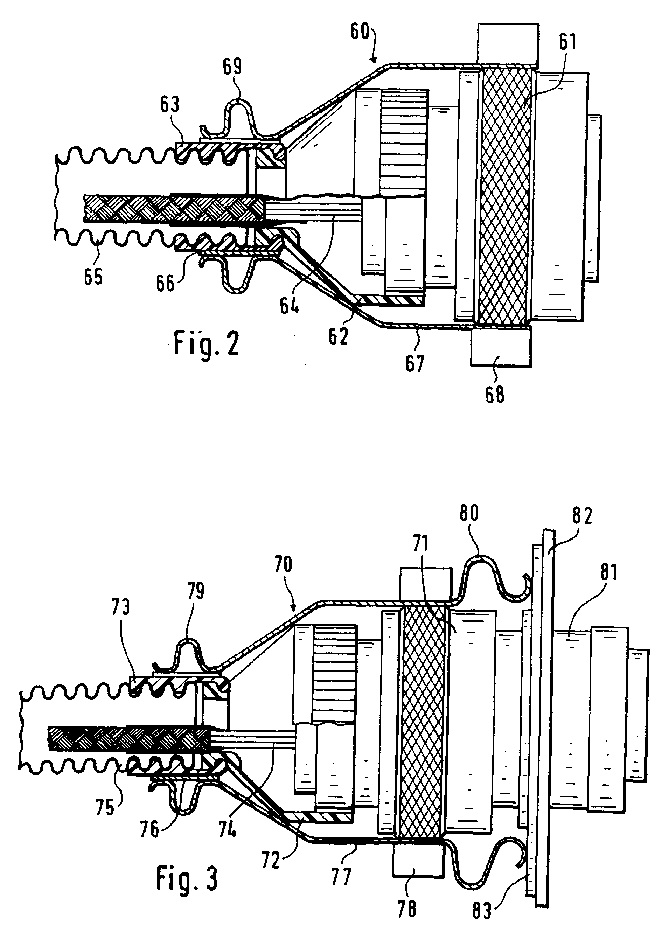

In den Figuren 2 und 3 sind zwei Anschlußelemente dargestellt. Grundlage sowohl des in Fig. 2 dargestellten Anschlußelementes 60 als auch des in Fig. 3 dargestellten Anschlußelementes 70 bildet jeweils wieder ein vielpoliger Rundsteckverbinder, der mittels einer Überwurfmutter 61 bzw. 71 an der jeweils dafür vorgesehenen Gerätedose verriegelt wird. Eine derartige Gerätedose 81 ist in Fig. 3 in ihrer Einbaulage in einer Frontplatte 82 eines Gerätes dargestellt. Bei den beiden Anschlußelementen 60 und 70 ist jeweils das Gehäuse als Überwurfmutter 62 bzw. 72 drehbar in einer Buchse 63 bzw. 73 gelagert, wobei diese Buchsen 63 bzw. 73 im Fall der hier dargestellten Ausführungsbeispiele, in denen der als Abschirmung eines Kabelbaumes 64 bzw. 74 verwendete metallische Wellschlauch 65 bzw. 75 jeweils eine Ringstruktur aufweist, aus zwei Halbschalen bestehen und mittels eines ebenfalls metallischen Quetschringes 66 bzw. 76 zusammengehalten werden. Die Innenstruktur der Buchsen 63 und 73, die ebenfalls aus Metall bestehen, ist dabei wiederum der Außenstruktur des verwendeten Wellschlauches 65 bzw. 75 angepaßt.

Die Gehäuse als Überwurfmutter 62 und 72 der beiden Anschlußelemente als Stecker 60 und 70 sind jeweils von einer metallischen Haube 67 bzw. 77 umschlossen, deren rückwärtiges Ende auf dem Quetschring 66 bzw. 77 jeweils mittels einer Zweiohrklemme 68 bzw. 78 auf die äußere Struktur der Überwurfmutter 61 bzw. 71 gepreßt wird. Bei beiden Hauben 67 und 77 sind die schlauchseitigen Enden durch Längsschlitze lamellenartig ausgebildet, wobei diese Lamellen 69 bzw. 79 als Einzelfedern unter Vorspannung auf dem jeweiligen Quetschring 66 bzw. 76 aufliegen.

Bei dem in Fig. 3 dargestellten Anschlußelement als Stecker 70 ist die Haube 77 über Klemme 78 hinaus in Richtung auf die Gerätedose 81 gezogen und auch hier in lamellenartige Einzelfedern 80 unterteilt, die an einer Kontaktplatte 83 anliegen. Bei beiden Anschlußelemente 60 und 70 gewährleisten für die jeweils vorgesehene Haube 67 bzw. 77 die Fortsetzung der Abschirmungswirkung und die elektrische Verbindung des Schlauches 65 bzw. 75 auch im Bereich des Anschlußelementes. Dadurch kann in beiden Fällen das Gehäuse 62 bzw. 72 als Überwurfmutter jeweils aus einem Kunststoff bestehen und so erheblich zur Gewichtseinsparung beitragen.

Im Fall des Anschlußelementes 70 gem. Fig. 3 ist darüber hinaus auch die Überwurfmutter 71 aus Kunststoff als nicht stromleitend ausgebildet, da hier die Haube 77 eine durchgehende Masseverbindung zwischen dem Schlauch 75 und der Gerätedose 81 gewährleistet. Ein weiterer Vorteil, der sich aus der Verwendung einer derartigen Haube ergibt, liegt darin, daß auf diese Weise eine vollständig geschlossene Abschirmung besteht, in der keine freien, d.h. ungeschützten Bereiche existieren.

Allen vorstehend beschriebenen Anschlußelementen ist darüber hinaus gemeinsam, daß sie gegenüber dem den Kabelbaum umgebenden Wellschlauch frei drehbar sind, so daß auch bei ungünstiger Einbaulage der Anordnung bzw. einzelner Gerätedosen mit verschiedener Polanordnung bzw. Codierung eine Torsionseinwirkung auf den Wellschlauch von vornherein ausgeschlossen ist.

Selbstverständlich ist es möglich, unter Berücksichtigung der dargestellten Grundmerkmale auch weitere Ausführungen zu gestalten.

Gemäß Fig. 5 ist eine vereinfachte Ausbildung einer Klammer bzw. Schelle 51 dargestellt, wodurch ein Schlauch 52 zwecks Masseverbindung mit der Struktur des Flugzeuges verbindbar ist. Hierzu ist ein Ansatz 53 vorgesehen. Um eine formschlüssige Verbindung zwischen dem Schlauch 52 und der Klammer 51 herzustellen, sind Teile des Randes 54,55,56,57 der Klammer 51 im Bereich des Schlauches 52 nach innen gebogen und greifen in die betreffenden Rillen des Wellenschlauches ein. Durch diese Maßnahme werden die Herstellkosten der Klammer 51 reduziert.

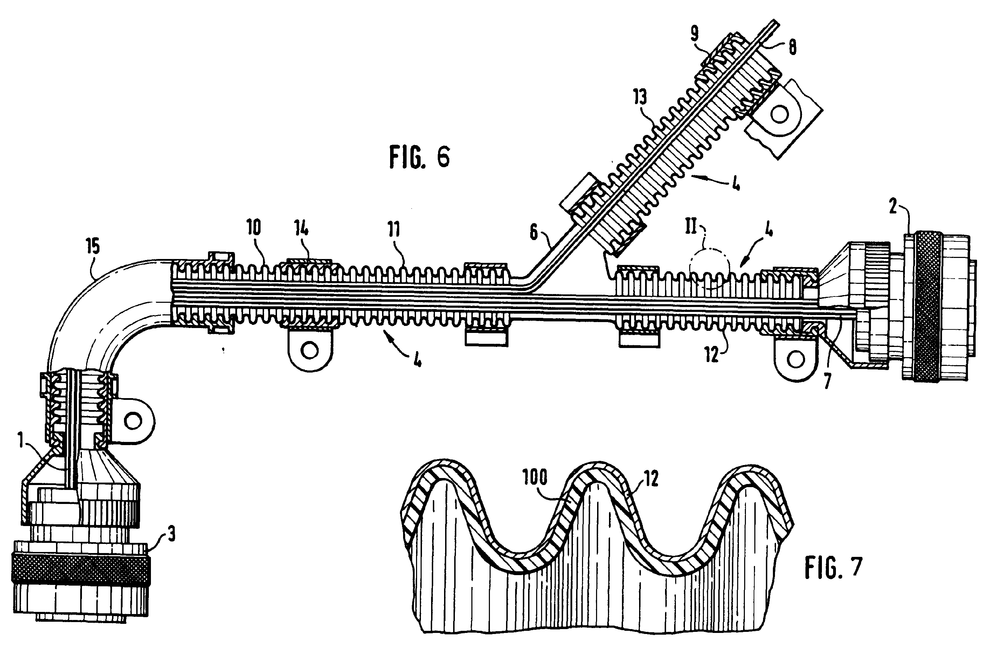

Das Ausführungsbeispiel gemäß Fig. 6 stimmt mit der Ausführung gemäß Fig. 1 im wesentlichen überein. Anstatt des Kunststoffgeflechts 5 ist hierbei die Innenfläche der Profilschläuche 4,10,13 und des Verzweigungselementes 6 im Berührungsbereich mit den Leitungen 7 mit einer Schicht 100 aus einem Kunststoffwerkstoff beschichtet, wobei die Schicht 100 als Scheuerschutz dient. Dieses ist gemäß Fig. 7 in vergrößerter Darstellung gezeigt.

## Patentansprüche

1. Einrichtung zum Schutz elektrischer Anlagen gegen elektromagnetische Störungen, insbesondere Überspannungen und Blitzeinwirkungen, in Form metallischer Profilschläuche (4,10-13,41-43,65,75), die die zwischen den einzelnen elektrischen Geräten verlegten Leitungen (7,8,64,74) umgeben und die elektrisch leitend mit Ableitpunkten verbunden sind und bei der die Anschlußelemente (2,3,20,60,70) jeweils mit einer Buchse (63,73) zur Aufnahme des Profilschlauches (4,10-13,41 -43,65,75) sowie mit einem Spannelement (44,45,46,49,66,76) zur Fixierung des Profilschlauches (4,10-13,41-43,65,75) versehen sind, dadurch gekennzeichnet, daß zwischen dem Profilschlauch (4,10-13, 41 -43,65, 75) und den Leitungen (7,8,64,74) ein Kunststoffgeflecht (5) als Scheuerschutz angeordnet ist, die Leitungen (7,8,64,74) zu einem Kabelbaum (1) zusammengefaßt sind und daß der Kabelbaum (1) vom Kunststoffgeflecht (5) überzogen und gemeinsam mit dem Kunststoffgeflecht (5) in den Profilschlauch (4,10-13,41-43,65,75) eingelegt ist.

2. Einrichtung nach Anspruch 1, dadurch gekennzeichnet, daß die Profilschläuche (4,14-13, 41-43,65,75) mit endseitig angeordneten Anschlußelementen (2,3,20,60,70) in Form von Steckern drehbeweglich verbunden sind.

3. Einrichtung nach Anspruch 1 oder 2, dadurch gekennzeichnet, daß die Anschlußelemente (60,70) als Stecker über Buchsen (63,73) mit den Schläuchen (65,75) verbunden sind, die jeweils aus geteilten Halbschalen bestehen, die auf ihrer Innenseite mit einem Profil versehen sind, das der äußeren Form der Schläuche (65,75) entspricht.

4. Einrichtung nach einem der Ansprüche 1 bis 3 dadurch gekennzeichnet, daß zur Verlegung der Profilschläuche (4,10-13,41-43,65,75) in einer gegebenen Struktur Verzweigungselement (6), Verbindungselemente (14) sowie Formstücke (15) vorgesehen sind, die jeweils eine der äußeren Form der Schläuche entsprechende Innenstruktur aufweisen.

5. Einrichtung nach einem der Ansprüche 1 bis 4, dadurch gekennzeichnet, daß dem Profilschlauch (52) zur Masseverbindung eine Klammer (51) mit einem Ansatz (53) zugeordnet ist, wobei die Randzonen (54-57) nach innen gebogen sind und in die Rillen des Profilschlauches (52) eingreifen.

## Claims

1. A device for the protection of electrical systems against electromagnetic interferences, in particular excess voltages and the effects of lightning, in the form of metallic profile hoses (4, 10-13, 41-43, 65, 75), which surround the lines (7, 8, 64, 74) laid between the individual electrical units and which are connected electrically to conductive discharge points and with which the connecting elements (2, 3, 20, 60, 70) are provided in each case with a bush (63, 73) for accepting the profile hose (4 ,10-13, 41-43, 65, 75), and with a clamping element (44, 45, 46, 49, 66, 76) for fixing the profile hose (4 ,10-13, 41-43, 65, 75), characterised in that between the profile hose (4, 10-13, 41-43, 65, 75), and the lines (7, 8, 64, 74) plastic braiding (5) is arranged as chafing protection, the lines (7, 8, 64, 74) are united to form a cable loom/harness (1) and that the cable loom/harness (1) is covered by the plastic braiding (5) in the profile hose (4 ,10-13, 41-43, 65, 75).

2. A device according to claim 1 characterised in that the profile hoses (4, 14-13, 41-43, 65, 75), are connected to rotate to connecting elements (2, 3, 20, 60, 70) in the form of plugs arranged at the ends.

3. A device according to claim 1 or 2 characterised in that the connecting elements (60, 70) as connectors are connected to the hoses (65, 75), via bushes (63, 73) which comprise separate halves of a shell in each case, which are provided with a profile on their inner face, which corresponds to the external form of the hoses (65, 75).

4. A device according to one of the claims 1 to 3 characterised in that to install the profile hoses (4, 10-13, 41-43, 65, 75), in a given structure branch elements (6), connecting elements (14) and form pieces (15) are provided, which feature in each case an internal structure corresponding to the external form of the hoses.

5. A device according to one of the claims 1 to 4, characterised in that a clamp (51) having a projection (53) is associated with the profile hose (52) for the ground/chassis connection, the edge zones (54-57) being bent inwards and engaging in the grooves of the profile hose (52).

## Revendications

1. Dispositif de protection d'installations électriques contre des perturbations électromagnétiques, en particulier des surtensions et des effets de la foudre, comprenant des profilés tubulaires métalliques (4, 10, 13, 41-43, 65, 75) enveloppant les conducteurs (7, 8, 64, 74) disposés entre les différents appareils électriques reliés électriquement par des points de contact, les éléments de raccordement (2, 3, 20, 60, 70) étant équipés chacun d'une douille (63, 73) recevant le profilé tubulaire (4, 10-13, 41-43, 65, 75) ainsi que d'un organe à tension élastique (44, 45, 46, 49, 66, 76) assurant la fixation du profilé tubulaire (4, 10-13, 41-43, 65, 75), caractérisé en ce qu'une tresse en matière plastique (5) est intercalée entre le profilé tubulaire (4, 10-13, 41-43, 65, 75) et les conducteurs de manière à les protéger contre l'abrasion, les conducteurs (7, 8, 64, 74) étant réunis en un faisceau (1) enveloppé dans une tresse en matière plastique (5), le faisceau avec sa tresse étant logé à l'intérieur du profilé tubulaire (4, 10-13, 41-43, 65, 75).

2. Dispositif selon la revendication 1, caractérisé en ce que les profilés tubulaires (4, 14-13, 41-43, 65, 75) sont reliés, avec possibilité de rotation, à des éléments de raccordement (2, 33, 20, 60, 70) disposés à leur extrémité sous forme de connecteurs.

3. Dispositif selon la revendication 1 ou 2, caractérisé en ce que les éléments de raccordement (60, 70) sous forme de connecteurs sont reliés aux tubes (65, 75) par des douilles (63, 73) constituées de deux demi-coquilles dont les parois internes ont un profil correspondant à celui des parois externes des tubes (65, 75).

4. Dispositif selon l'une des revendications 1 à 3, caractérisé en ce que pour permettre le montage des profilés tubulaires (4, 10-13, 41-43, 65, 75) dans une structure existante, il est prévu un élément de ramification (6), des éléments de liaison (14) ainsi que des pièces de forme (15), tous ces organes comportant une structure interne adaptée à la forme externe des tuyaux.

5. Dispositif selon l'une des revendications 1 à 4, caractérisé en ce que le profilé tubulaire (52), pour assurer sa mise à la masse, est monté dans une pince (51) équipée d'une patte (53) de raccordement, et dont les zones marginales (54-57) sont rabattues vers l'intérieur de manière à être engagées dans les rainures du profilé tubulaire (52).
